# EUROPÄISCHE PATENTSCHRIFT

(11) **EP 0 471 989 B1**
(45) Veröffentlichungstag und Bekanntmachung des Hinweises auf die Patenterteilung: **13.10.1993**
(21) Anmeldenummer: 91112167.1
(22) Anmeldetag: 20.07.1991
(51) Int. Cl.: F16L 3/10

(54) **Rohrschelle**
Pipe clamp
Collier de serrage

(30) Priorität: 23.08.1990 DE 4026636
(43) Veröffentlichungstag der Anmeldung: 26.02.1992
(73) Patentinhaber: "TOGE-DÜBEL" A. Gerhard GmbH, D-90431 Nürnberg (DE)
(72) Erfinder: Gerhard, Anton, W-8500 Nürnberg 80 (DE)
(74) Vertreter: Rau, Manfred, Dr. Dipl.-Ing.

(56) Entgegenhaltungen:
- EP-A- 0 225 515
- EP-A- 0 319 521
- DE-U- 1 945 024
- DE-U- 9 002 878

## Beschreibung

Die Erfindung betrifft eine Rohrschelle nach dem Oberbegriff des Anspruches 1.

Aus der EP-B1-0 319 521 ist eine derartige Rohrschelle bekannt, bei der am Verriegelungsflansch auf der dem Gewindeflansch abgewandten Seite eine Unterlegscheibe verschiebbar geführt ist, die ein an einem Ende offenes Langloch aufweist und die nach dem Hindurchschieben des Kopfes der Schraube durch die Durchlaßöffnung im Verriegelungsflansch zwischen diesen Kopf und den Verriegelungsflansch einführbar ist. Diese Ausgestaltung weist einerseits den angestrebten Vorteil auf, daß hierdurch die Schraube verhältnismäßig kurz gehalten werden kann; andererseits weist sie den Nachteil auf, daß die Unterlegscheibe nach dem Zusammendrücken des Gewindeflansches und des Verriegelungsflansches manuell zwischen Verriegelungsflansch und Kopf der Schraube geschoben den muß. Dies setzt eine Zwei-Hand-Bedienung voraus.

Aus der nicht vorveröffentlichten DE-A-39 09 367 (entsprechend EP-A-388663) ist eine derartige Rohrschelle bekannt, bei der am Gewindeflansch ein Schließbügel angebracht ist, der zum provisorischen Schließen der Rohrschelle über einen am anderen Bügel ausgebildeten zugeordneten Flansch geschwenkt werden kann. Dieser Schließbügel bildet also eine Montagehilfe. Nach dem Einschieben eines Rohres in eine in der Regel an einer Decke, Wand oder sonstigen Tragkonstruktion bereits befestigte Rohrschelle kann dieser Schließbügel mit nur einer Hand geschlossen werden, so daß das Rohr erst einmal provisorisch in der Rohrschelle gehalten ist.

Aus dem DE-U-19 45 o24 ist eine Rohrschelle bekannt, bei der der Gewindeflansch teil-zylindrisch nach außen um einen zylindrischen Zapfen gerollt ist, in dem eine diametral hindurchgehende Gewindebohrung ausgebildet ist. Der zugeordnete andere Flansch weist einen Einschnitt auf, ist also gabelförmig ausgebildet. Zum Einlegen eines Rohres o. dgl., das mittels der Rohrschelle an einer Decke, Wand oder sonstigen Tragkonstruktion befestigt werden soll, wird eine nur geringfügig in die Gewindebohrung des Zapfens eingeschraubte Schraube in den Einschnitt des gegenüberliegenden Flansches eingeschwenkt, wodurch ein provisorisches Schließen der Schelle erreicht wird. In dieser Stellung kann das Rohr in der Schelle ausgerichtet werden. Diese Lösung ist fertigungstechnisch außerordentlich aufwendig.

Der Erfindung liegt die Aufgabe zugrunde, eine Rohrschelle der gattungsgemäßen Art so auszugestalten, daß ein provisorisches Schließen der Rohrschelle mit einer Hand in sicherer Weise möglich ist, wobei die Verbindung gegen ein unabsichtliches Öffnen gesichert sein soll.

Diese Aufgabe wird erfindungsgemäß durch die Merkmale im Kennzeichnungsteil des Anspruches 1 gelöst. Ein Schließen der Rohrschelle ist durch einfaches Verschwenken des schwenkbaren Bügels relativ zum anderen Bügel möglich. Hierbei drückt der Kopf der Schraube die Fangplatte beiseite, bis diese elastisch wieder zwischen dem Kopf der Schraube und dem Verriegelungsflansch einrastet. Es ist also nicht notwendig, die Schraube zu verschwenken oder ein weiteres gesondertes Teil zu verschwenken. Ein Lösen dieser Verbindung ist nur möglich, wenn die Fangplatte vom Verriegelungsflansch abgeschwenkt wird, was voraussetzt, daß wiederum der Kopf der Schraube nicht hiergegen anliegt, sondern daß der Kopf der Schraube völlig frei von der Fangplatte ist, daß der Bügel mit Verriegelungsflansch und Fangplatte also relativ zur Schraube völlig entlastet ist.

Die Ausgestaltung nach Anspruch 2 und insbesondere nach Anspruch 3 stellt sicher, daß die Fangplatte als gegenüber dem Verriegelungsflansch eigenständiges Teil an diesem gesichert zwischen dessen Rand und dem Bügel selber gehalten und geführt ist.

Die Weiterbildung nach Anspruch 4 schafft eine Seitenführung für die Fangplatte relativ zum Verriegelungsflansch und insbesondere einen Schwenkanschlag, so daß beim Aufschwenken der Schwenkplatte beim Durchstecken des Kopfes der Schraube durch die Durchlaßöffnung des Verriegelungsflansches die Fangplatte nicht aus ihrer positionierten Lage zum Verriegelungsflansch gehoben bzw. geschoben werden kann.

Die Weiterbildung nach Anspruch 5 und insbesondere nach Anspruch 6 gibt eine besonders einfache Ausgestaltung und Anordnung des elastischen Gliedes wieder, bei dem es sich um einen Gummiring handeln kann. Insbesondere durch die weitere Ausgestaltung nach Anspruch 7 und Anspruch 8 wird erreicht, daß mit dem elastischen Glied gleichzeitig auch eine Positionierung zwischen Fangplatte und Verriegelungsflansch geschaffen wird, und zwar auch bei von dem Verriegelungsflansch abgeschwenkter Fangplatte.

Die Weiterbildung nach Anspruch 9 ermöglicht eine Herstellung der provisorischen Verbindung, ohne daß die Fangplatte durch den Kopf der Schraube in eine Stellung verschwenkt werden muß, in der sie senkrecht zum Verriegelungsflansch angeordnet wäre.

Weitere Vorteile und Einzelheiten der Erfindung ergeben sich aus der nachfolgenden Beschreibung eines Ausführungsbeispieles anhand der Zeichnung. Es zeigt
- Fig. 1: eine Rohrschelle nach der Erfindung in geöffnetem Zustand,
- Fig. 2: die Rohrschelle in teilgeschlossenem Zustand und
- Fig. 3: eine Draufsicht auf die Fangplatte der Rohrschelle.

Die in der Zeichnung dargestellte Rohrschelle weist zwei etwa halbkreisförmige Bügel 1, 2 auf, die eine gemeinsame Mittelachse 3 haben. Der eine Bügel 1 ist an seinen Enden mit Gewindeflanschen 4, 5 versehen, d.h. diese etwa radial zur Mittelachse 3 abstehenden Gewindeflansche 4, 5 sind mit Gewindebohrungen 6 versehen. Mittig zwischen den beiden Gewindeflanschen 4, 5 ist auf der Außenseite des Bügels 1 eine Befestigungseinrichtung 7 in Form einer Mutter durch Schweißen befestigt. Hiermit kann die Rohrschelle an einem entsprechenden Gewindebolzen an einer Decke, an einer Wand oder einem sonstigen Traggerüst befestigt werden. Dieser Teil der Rohrschelle, d.h. dieser Bügel 1, wird damit bei einer derartigen Befestigung ortsfest festgelegt.

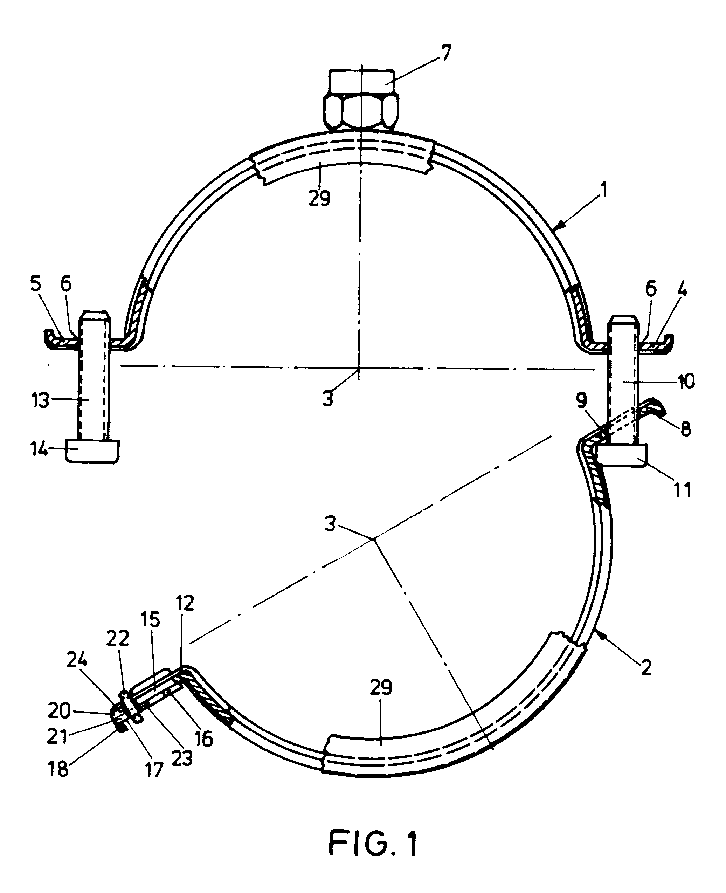

Der andere Bügel 2 ist an seinem einen Ende mit einem Gelenkflansch 8 versehen, in dem ein Langloch 9 ausgebildet ist. Durch dieses Langloch 9 ist eine Schraube 1o hindurchgesteckt, die in die Gewindebohrung 6 des Gewindeflansches 4 geschraubt ist. Der Kopf 11 der Schraube 1o ist auf der Außenseite des Gelenkflansches 8 angeordnet. Wie Fig. 1 erkennen läßt, ist aufgrund des Langloches 9, dessen Längsrichtung radial zur Mittelachse 3 verläuft, der Bügel 2 gegenüber dem Bügel 1 um die Schraube 1o verschwenkbar, wenn der Gewindeflansch 4 und der Gelenkflansch 8 nicht mittels der Schraube 1o fest gegeneinander verspannt sind, sondern einen ausreichenden Abstand voneinander aufweisen.

Am schwenkbaren Bügel 2 ist gegenüber dem Gelenkflansch 8 ein Verriegelungsflansch 12 ausgebildet. Alle vier Flansche 4, 5, 8, 12 sind starr und einstückig mit dem jeweiligen Bügel 1, 2 ausgebildet.

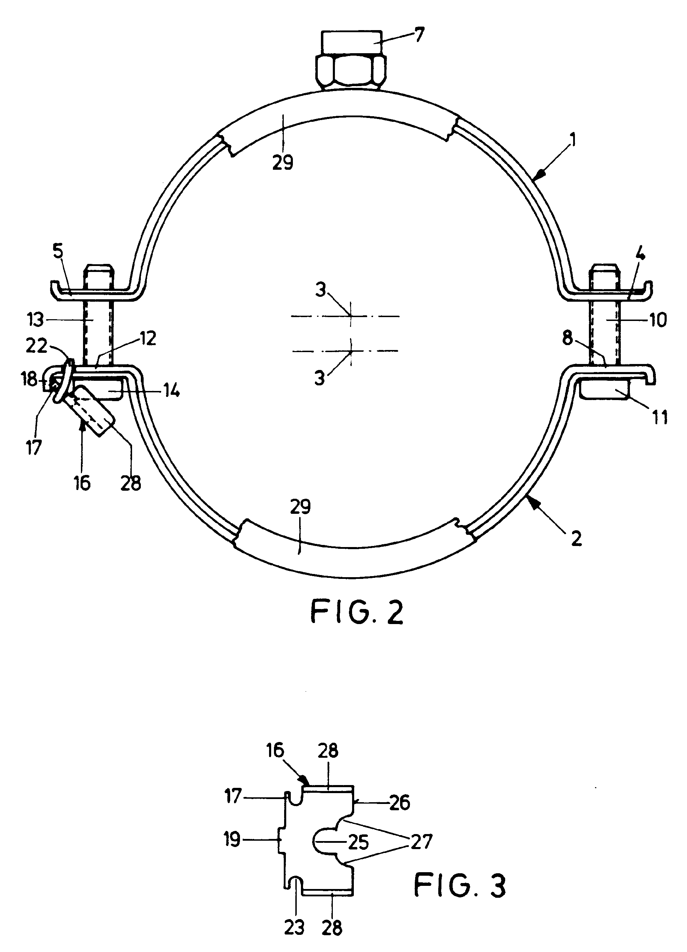

In dem dem Verriegelungsflansch 12 zugeordneten Gewindeflansch 5 ist ebenfalls eine der Schraube 1o gleiche Schraube 13 angeordnet, die einen dem Verriegelungsflansch 12 zugewandten Kopf 14 aufweist. Im Verriegelungsflansch 12 ist eine Durchlaßöffnung 15 ausgebildet, deren Durchmesser mindestens so groß ist wie der Durchmesser des Kopfes 14, so daß letzterer durch die Durchlaßöffnung 15 hindurchgesteckt werden kann, wie in Fig. 2 angedeutet ist.

Auf der dem Gewindeflansch 5 abgewandten Außenseite des Verriegelungsflansches 12 ist auf diesem eine Fangplatte 16 angeordnet. Diese ist mit einem zur Mittelachse 3 parallelen Steg 17 versehen, der an einem nach außen abgebogenen Rand 18 des Verriegelungsflansches 12 anliegt. Der Steg 17 weist wiederum noch einen Vorsprung 19 auf, der in eine Ausnehmung 2o im Rand 18 und im benachbarten Bereich des Verriegelungsflansches 12 eingreift, so daß die Fangplatte 16 um eine durch die Anlage des Steges 17 am Rand 18 gebildete Schwenkachse 21 verschwenkt werden kann, wobei der Vorsprung 19 als Anschlag in der Ausnehmung 2o die Verschwenkung etwa in der in Fig. 2 dargestellten Stellung begrenzt. In der Nähe der erwähnten Schwenkachse 21 sind die Fangplatte 16 und der Verriegelungsflansch 12 mittels eines elastischen Gliedes 22 miteinander verbunden, das die Fangplatte 16 in eine an dem Verriegelungsflansch 12 anliegende Stellung drückt bzw. zieht. Hierbei kann es sich um einen Gummiring handeln, der in entsprechende Ausnehmungen 23, 24 im Steg 17 der Fangplatte 16 einerseits und im Verriegelungsflansch 12 in der Nähe des radial außen liegenden Randes 18 andererseits eingreift, wodurch die Fangplatte 16 auch bezogen auf die Mittelachse 3 radial zum Verriegelungsflansch 12 festgelegt wird.

In der Fangplatte 16 ist eine U-förmige Öffnung 25 ausgebildet, deren Weite etwa dem Durchmesser der Schraube 13 entspricht. Diese Öffnung 25 liegt über der Durchlaßöffnung 15 und ist so angeordnet, daß sie in der Flucht der Schraube 13 liegt, wenn der Verriegelungsflansch 12 mit der Fangplatte 16 angenähert senkrecht zur Längsrichtung der Schraube 13 verläuft, wie dies in Fig. 2 angedeutet ist. Diese U-förmige Öffnung 25 weist zu dem dem Steg 17 gegenüberliegenden, zum Bügel 2 hin gerichteten Rand 26 eine Erweiterung 27 auf, die in ihren Abmaßen dem Durchmesser und der Dicke des Kopfes 14 der Schraube 13 angepaßt ist. Wenn die Rohrschelle geschlossen werden soll, d.h. wenn der Bügel 2 auch auf der Seite seines Verriegelungsflansches 12 mit der im Bügel 1 befindlichen Schraube 13 verbunden werden soll, dann wird der Bügel 2 derart in Richtung auf den Bügel 1 gedrückt, daß der Kopf 14 der Schraube 13 durch die Durchlaßöffnung des Verriegelungsflansches 12 hindurchgeschoben wird, wobei die Fangplatte 16 gegen die Kraft des elastischen Gliedes 22 vom Verriegelungsflansch 12 weggeschwenkt wird, wie in Fig. 2 angedeutet ist. Die Erweiterung 27 der Öffnung 25 gleitet dann über den Kopf 14, so daß die Fangplatte 16 aufgrund der Kraft des elastischen Gliedes 22 wieder gegen den Verriegelungsflansch 12 geschwenkt wird.

Die Fangplatte 16 befindet sich wieder in ihrer Anlage gegen den Verriegelungsflansch 12. Die Schraube 13 durchsetzt die Öffnung 25. Der Kopf 14 der Schraube 13 liegt von außen gegen die Fangplatte 16 an, die jetzt als normales Widerlager für den Kopf 14 der Schraube 13 dient. Durch Anziehen der Schraube 13 und entsprechend auch der Schraube 1o wird der Bügel 2 gegen den Bügel 1 verspannt. Dieses Schließen der Rohrschelle durch einfaches Verschwenken des Bügels 2 gegen den Bügel 1 dient zur Vormontage, wenn beispielsweise ein Rohr o. dgl. mit der Rohrschelle gehalten werden soll. Dieses vorläufige Schließen der Rohrschelle kann in einfacher Weise dadurch wieder rückgängig gemacht werden, daß der Bügel 2 geringfügig zum Bügel 1 hin geschoben wird, und daß dann die Fangplatte 16 gegen die Kraft des elastischen Gliedes 22 vom Verriegelungsflansch 12 abgeschwenkt wird, wodurch die Schraube 13 mit ihrem Kopf 14 wieder durch die Erweiterung 27 der Öffnung 25 und dann die Durchlaßöffnung 15 des Verriegelungsflansches 12 gezogen werden kann.

Die Fangplatte 16 weist zwei Wangen 28 auf, die den Verriegelungsflansch 12 seitlich umfassen, und die bei zusammengespannter Rohrschelle auch den zugehörigen Gewindeflansch 5 seitlich umgreifen. Üblicherweise sind die Bügel 1, 2 an ihrer Innenseite mit Gummi-Manschetten 29 versehen, die in der Zeichnung nur angedeutet sind.

## Patentansprüche

1. Rohrschelle, bestehend aus zwei etwa halbkreisförmigen, etwa eine gemeinsame Mittelachse (3) aufweisenden, an ihrem einen Ende mittels eines Gelenks miteinander verbundenen Bügeln (1, 2), wobei der eine Bügel (1) an seinem anderen Ende mit einem Gewindeflansch (5) versehen ist, in den eine Schraube (13) eingeschraubt ist, und wobei der andere Bügel (2) an seinem anderen Ende mit einem dem Gewindeflansch (5) zugeordneten Verriegelungsflansch (12) versehen ist, der mit einer Einrichtung zum Fangen des Kopfes (14) der Schraube (13) versehen ist und der eine Durchlaßöffnung (15) aufweist, deren Durchmesser mindestens dem des Kopfes (14) der Schraube (13) entspricht, dadurch gekennzeichnet, daß auf der dem Gewindeflansch (5) abgewandten Seite des Verriegelungsflansches (12) an diesem eine Fangplatte (16) angebracht ist, die gegen die Kraft eines elastischen Gliedes (22) um eine Schwenkachse (21) von dem Verriegelungsflansch (12) wegschwenkbar ist, und die eine Öffnung (25) aufweist, deren Weite geringer ist als der Durchmesser des Kopfes (14) der Schraube (13) und die zu dem Rand (26) der Fangplatte (16) hin offen ist, der der Schwenkachse (21) gegenüberliegt.

2. Rohrschelle nach Anspruch 1, dadurch gekennzeichnet, daß die Schwenkachse (21) parallel zur Mittelachse (3) der Rohrschelle verläuft.

3. Rohrschelle nach Anspruch 1 oder 2, dadurch gekennzeichnet, daß die Fangplatte (16) mit einem Steg (17) gegen einen umgebogenen äußeren Rand (18) des Verriegelungsflansches (12) unter Bildung der Schwenkachse (21) anliegt.

4. Rohrschelle nach einem der Ansprüche 1 bis 3, dadurch gekennzeichnet, daß die Fangplatte (16) mit einem Vorsprung (19) in eine Ausnehmung (2o) des Verriegelungsflansches (12) zur Schwenkbegrenzung der Fangplatte (16) eingreift.

5. Rohrschelle nach einem der Ansprüche 1 bis 4, dadurch gekennzeichnet, daß das elastische Glied (22) benachbart zur Schwenkachse (21) an der Fangplatte (16) und dem Verriegelungsflansch (12) angreift.

6. Rohrschelle nach Anspruch 5, dadurch gekennzeichnet, daß das elastische Glied (22) ringförmig aus elastischem Material ausgebildet ist.

7. Rohrschelle nach Anspruch 6, dadurch gekennzeichnet, daß das elastische Glied (22) den Steg (17) und den Verriegelungsflansch (12) umgreift.

8. Rohrschelle nach Anspruch 6 oder 7, dadurch gekennzeichnet, daß das elastische Glied (22) in deckungsgleiche Ausnehmungen (23, 24) in der Fangplatte (16) und in dem Verriegelungsflansch (12) eingreift.

9. Rohrschelle nach einem der Ansprüche 1 bis 8, dadurch gekennzeichnet, daß die Öffnung (25) im Bereich des Randes (26) der Fangplatte (16), zu dem hin sie offen ist, eine dem Kopf (14) der Schraube (13) angepaßte Erweiterung (27) aufweist.

## Claims

1. Pipe clamp consisting of two about semi-circular bows (1, 2), which have approximately one common central axis (3) and are interconnected by an articulation at one of their ends, one bow (1) being provided at its other end with a threaded flange (5), into which a screw (13) is screwed, and the other bow (2) being provided at its other end with a locking flange (12) associated with the threaded flange (5) and provided with a device to catch the head (14) of the screw (13) and having a pass-through opening (15), of which the diameter corresponds at least to that of the head (14) of the screw (13), characterized in that, on the side of the locking flange (12) facing away from the threaded flange (5), a catch plate (16) is arranged on the locking flange (12) and is pivotable away from the locking flange (12) about a pivot axis (21) against the force of an elastic member (22), and has an opening (25), of which the width is smaller than the diameter of the head (14) of the screw (13) and which is open towards the rim (26) of the catch plate (16), which rim (26) is opposite to the pivot axis (21).

2. Pipe clamp according to claim 1, characterized in that the pivot axis (21) extends parallel to the central axis (3) of the pipe clamp.

3. Pipe clamp according to claim 1 or 2, characterized in that the catch plate (16) bears with a web (17) against a bent outer rim (18) of the locking flange (12) thus forming the pivot axis (21).

4. Pipe clamp according to one of claims 1 to 3, characterized in that a projection (19) of the catch plate (16) engages with a recess (20) of the locking flange (12) to form a limitation of a pivoting of the catch plate (16).

5. Pipe clamp according to one of claims 1 to 4, characterized in that adjacent to the pivot axis (21) the elastic member (22) engages the catch plate (16) and the locking flange (12).

6. Pipe clamp according to claim 5, characterized in that the elastic member (22) is annular and of elastic material.

7. Pipe clamp according to claim 6, characterized in that the elastic member (22) surrounds the web (17) and the locking flange (12).

8. Pipe clamp according to claims 6 or 7, characterized in that the elastic member (22) engages with congruent recesses (23, 24) in the catch plate (16) and in the locking flange (12).

9. Pipe clamp according to one of claims 1 to 8, characterized in that the opening (25) has a widening (27) suited to match the head (14) of the screw (13) in the vicinity of the rim (26), towards which it is open, of the catch plate (16).

## Revendications

1. Collier de serrage, comprenant deux étriers sensiblement semi-circulaires (1, 2) qui possèdent un axe médian commun (3) et sont reliés l'un à l'autre à l'une de leurs extrémités au moyen d'une articulation, l'un des étriers (1) étant muni, à son autre extrémité, d'une bride filetée (5) dans laquelle s'engage une vis (13), et l'autre étrier (2) étant muni, à son autre extrémité, d'une bride de verrouillage (12) qui est associée à la bride filetée (5), qui est pourvue d'un dispositif pour arrêter la tête (14) de la vis (13) et qui comporte une ouverture de passage (15) dont le diamètre correspond au moins à celui de la tête (14) de la vis (13), caractérisé en ce que, sur le côté de la bride de verrouillage (12) opposé à la bride filetée (5), est disposée, contre ladite bride de verrouillage, une plaque d'arrêt (16) qui peut être écartée de la bride de verrouillage (12) en basculant autour d'un axe de basculement (21) à l'encontre de la force d'un élément élastique (22), et qui comporte une ouverture (25) dont la largeur est inférieure au diamètre de la tête (14) de la vis (13) et qui est ouverte en direction du bord (26) de la plaque d'arrêt (16) situé à l'opposé de l'axe de basculement (21).

2. Collier de serrage selon la revendication 1, caractérisé en ce que l'axe de basculement (21) est parallèle à l'axe médian (3) du collier de serrage.

3. Collier de serrage selon la revendication 1 ou 2, caractérisé en ce qu'un talon (17) de la plaque d'arrêt (16) est appliqué contre un bord extérieur replié (18) de la bride de verrouillage (12), formant ainsi l'axe de basculement (21).

4. Collier de serrage selon l'une des revendications 1 à 3, caractérisé en ce qu'une saillie (19) de la plaque d'arrêt (16) pénètre dans un évidement (20) de la bride de verrouillage (12) pour limiter le basculement de la plaque d'arrêt (16).

5. Collier de serrage selon l'une des revendications 1 à 4, caractérisé en ce que l'élément élastique (22) agit sur la plaque d'arrêt (16) et sur la bride de verrouillage (12) au voisinage de l'axe de basculement (21).

6. Collier de serrage selon la revendication 5, caractérisé en ce que l'élément élastique (22) est de forme annulaire et réalisé en matériau élastique.

7. Collier de serrage selon la revendication 6, caractérisé en ce que l'élément élastique (22) entoure le talon (17) et la bride de verrouillage (12).

8. Collier de serrage selon la revendication 6 ou 7, caractérisé en ce que l'élément élastique (22) s'engage dans des évidements superposés (23, 24) ménagés dans la plaque d'arrêt (16) et dans la bride de verrouillage (12).

9. Collier de serrage selon l'une des revendications 1 à 8, caractérisé en ce que l'ouverture (25) comporte, dans la zone du bord (26) de la plaque d'arrêt (16), vers laquelle elle est ouverte, un élargissement (27) correspondant à la tête (14) de la vis (13).
